# EUROPÄISCHE PATENTSCHRIFT

(11) **EP 3 481 630 B1**
(45) Veröffentlichungstag und Bekanntmachung des Hinweises auf die Patenterteilung: **04.03.2020**
(21) Anmeldenummer: 16738126.8
(22) Anmeldetag: 08.07.2016
(51) Int. Cl.: B32B 27/08, B32B 27/32

(54) **RECYCLINGFÄHIGE POLYETHYLEN-FOLIE**
RECYCLABLE POLYETHYLENE FILM
PELLICULE DE POLYÉTHYLÈNE RECYCLABLE

(43) Veröffentlichungstag der Anmeldung: 15.05.2019
(73) Patentinhaber: Constantia Pirk GmbH & Co. KG, 92712 Pirk (DE)
(72) Erfinder: GREFENSTEIN, Achim, 67122 Altrip (AT); BÜTTNER, Stefan, 92318 Neumarkt i. d. Oberpf. (DE); GEILLERSDÖRFER, Ingo, 92708 Mantel (DE)
(74) Vertreter: Patentanwälte Pinter & Weiss OG
(86) Internationale Anmeldenummer: PCT/EP2016/066321
(87) Internationale Veröffentlichungsnummer: WO 2018/006980

(56) Entgegenhaltungen:
- EP-A1- 1 543 955
- EP-A1- 2 860 031
- US-A1- 2006 177 641
- US-A1- 2012 033 901
- US-A1- 2014 363 645

## Beschreibung

Die gegenständliche Erfindung betrifft eine recyclingfähige Polyethylen-Folie mit hoher Steifigkeit und Wärmeformbeständigkeit und ausreichend hoher Zähigkeit. Die erfindungsgemäße Polyethylen-Folie besteht aus zumindest 80% Polyethylen-Material und maximal 20 % kompatiblen Polyolefin-Material, wobei die Polyethylen-Folie kleiner 40 µm dick ist und eine zentrale Schicht aus linearem Polyethylen niedriger Dichte (LLDPE) und/oder linearem Metallocene Polyethylen niedriger Dichte (mLLDPE) und zwei mit der zentralen Schicht verbundenen Außenschichten aus Polyethylen hoher Dichte (HDPE), die die zentrale Schicht umgeben, aufweist, wobei der HDPE-Anteil der Polyethylen-Folie mindestens 60 Vol% ausmacht und wobei die Polyethylen-Folie in zumindest einer Richtung gereckt ist.

Heute übliche Verpackungsfolien aus Kunststoff sind Folienlaminate aus verschiedenen Schichten (je nach Anwendung und Funktion), wie z.B. Polyolefine wie Polyethylen (PE) oder Polypropylen (PP), oft auch kombiniert mit Polyethylenterephthalat (PET) als äußerer, bedruckter Schicht. Hierbei werden in der Regel Schichten aus verschiedenen Kunststoffen kombiniert. Auch Laminate von Kunststoffschichten mit anderen Materialien, wie Aluminium oder Papier, sind dabei denkbar. Verpackungen werden an sich auch immer mit einer außen sichtbaren Bedruckung gefertigt. Die Bedruckung wird dabei auf einer Schicht des Folienlaminats aufgebracht, die für das Bedrucken geeignet ist, z.B. eine Schicht aus biaxial gerecktem Polypropylen (BO-PP) oder Polyethylenterephthalat (BO-PET).

Als Druckverfahren für qualitativ hochwertige Verpackungen findet meistens ein Reihendruckverfahren, wie beispielsweise das Tiefdruckverfahren oder das Flexo-Reihendruckverfahren, Anwendung. Bei einem Reihendruckverfahren sind die einzelnen Druckwerke voneinander getrennt und die zu bedruckende Folienbahn durchläuft jeweils vor dem Auftrag der nächsten Farbe einen Trockner und mehrere Umlenkrollen, um den Trocknungsweg zu verlängern. Bei bestimmten Folien, insbesondere PE-Folien, führt dies jedoch zu Problemen bei der Registergenauigkeit bzw. zu inakzeptablen Druckbildern. PE-Folien und PE-Folienlaminate werden deshalb meist im Flexodruckverfahren in Satellitenbauweise auf sogenannten Zentraldruckzylindernmaschinen bedruckt. Dort wird die zu bedruckende Folienbahn zwischen den einzelnen Druckwerken auf einem Zentralzylinder geführt und erst anschließend getrocknet. Auch eine mögliche Zwischentrocknung nach einem Farbauftrag erfolgt auf dem Zentralzylinder, wobei die Folienbahn auch beim Trocknen auf dem Zentralzylinder geführt wird, was aber in der Regel keine vollständige Trocknung zwischen den Druckwerken ermöglicht, da der Trocknungsweg sehr kurz ist. Daher ist die Druckqualität bei einem Flexodruckverfahren in Satellitenbauweise nicht so hoch wie bei einem Reihendruckverfahren. Die dabei erzielbare Registergenauigkeit ist aber selbst bei PE-Folien, z.B. für Windelfolien, ausreichend hoch.

Bei hochwertigen Verpackungslaminaten fordern die Verpackungshersteller aufgrund des erzielbaren Druckbildes meist eine Bedruckung des Folienlaminats in einem Reihendruckverfahren, z.B. im Tiefdruckverfahren oder im (UV) Flexo-Reihendruckverfahren. Deshalb werden in solchen Folienlaminaten als bedruckte Folienbahn eine PET- oder PP-Folienbahn eingesetzt, die dann mit einem bei geringen Temperaturen siegelfähigen Material, wie PE-Folien, zum Folienlaminat kaschiert werden.

Die Folienlaminate für die Verpackungsindustrie sollen dabei natürlich aus Kostengründen so dünn wie möglich sein. Das bedingt, dass die einzelnen Folienschichten ihrer Funktion gemäß ebenfalls so dünn wie möglich ausgeführt sein sollen. Eine äußere Schicht, die nur das Druckbild trägt, soll dabei möglichst dünn sein. Nach heutigem Stand kommen hierfür beispielsweise bedruckte PET-Folienbahnen mit Schichtdicken von nur 12 µm zum Einsatz.

Solche in der Verpackungsindustrie eingesetzten Folienlaminate sind aber aufgrund der verschiedenen enthaltenen Materialien schwierig zu recyceln, da die Materialien schwer zu trennen sind. Es ist daher ein Trend auszumachen, in der Verpackungsindustrie sogenannten Monolaminate, also Folienlaminate aus (im Wesentlichen) nur einem Material, zu verwenden. Hier ist insbesondere ein Monolaminat aus Polyethylen (PE) interessant, weil Polyethylen in der Verpackungsindustrie das meist verwendete Siegelmedium ist. Es werden als Monolaminate auch Folienlaminate eingesetzt, die aus einem Hauptmaterial, z.B. PE, besteht und nur geringe Mengen an einem anderen Material enthält. Auch solche Folienlaminate werden im Sinne der Erfindung noch als Monolaminate angesehen und sind relativ einfach zu recyceln.

Das Problem bei einem Monolaminat aus Polyethylen ist, dass PE-Folien technisch relevanter Dicke von kleiner 40µm normalerweise in der geforderten Qualität nur bedingt oder gar nicht auf Druckanlagen in Reihenbauweise, und insbesondere nicht im Tiefdruckverfahren oder Flexo-Reihendruckverfahren, bedruckbar sind. Damit konnte man bisher solche für die Verpackungsindustrie einsetzbaren Monolaminate aus Polyethylen, die im Tiefdruckverfahren bedruckt sind, nicht herstellen.

Die DE 10 2005 003 922 A1 zeigt ein Folienlaminat aus einer gereckten HDPE-Druckfolie und einer LDPE-Trägerfolie, wobei die Druckfolie bedruckt wird. Die Trägerfolie soll dabei deutlich dicker sein, als die Druckfolie.

Die US 2006/177641 A1 zeigt ein koextrudiertes Folienlaminat mit einer Dicke kleiner 40µm aus Polyethylen mit einer zentralen Schicht aus LLDPE und zwei, die zentrale Schicht umgebende Außenschichten aus HDPE, die in Maschinenrichtung gereckt ist. Die Schichtverteilung des Folienlaminats ist 1/1/1. Eine solche dünne Polyethylen-Folie ist in einem Reihendruckverfahren nicht mit ausreichender Druckqualität bedruckbar.

Es ist eine Aufgabe der gegenständlichen Erfindung eine mit einem Reihendruckverfahren, insbesondere mit dem Tiefdruckverfahren oder Flexo-Reihendruckverfahren, bedruckbare Polyethylen-Folie anzugeben, die in der Verpackungsindustrie eingesetzt werden kann und die einfach zu recyceln ist.

Diese Aufgabe wird gelöst mit einer Polyethylen-Folie gemäß angefügtem Anspruch 1, bei der die beide Außenschichten zusammen mindestens dreimal so dick sind wie die zentrale Schicht. Mit einer solchen Folie wird eine ausreichende Bahnsteifigkeit bei 70°C, von vorzugsweise mindestens 10 N/mm, erzielt, was für das hochqualitative Bedrucken mit einem Reihendruckverfahren, wie dem Tiefdruckverfahren oder dem Flexo-Reihendruckverfahren, ausreicht. Mit einer solchen Folie kann der Registerfehler beim Drucken innerhalb der in der Verpackungsindustrie tolerierbaren Grenzen gehalten werden. Durch das Recken der Polyethylen-Folie wird zusätzlich der Haze-Wert der Folie verringert. Darüber hinaus weist die erfindungsgemäße Polyethylen-Folie eine ausreichende Wärmeformbeständigkeit und Zähigkeit auf. Durch den schichtweisen Aufbau mit einer dünnen, zähen zentralen Schicht und einer im Vergleich dazu deutlich dickeren Außenschichten und die Verteilung des HDPE hauptsächlich in die Außenschichten erreicht man die geforderte hohe Zähigkeit und Wärmeformbeständigkeit der Folie. Diese Eigenschaften können mit einem erfindungsgemäßen Aufbau besser erreicht werden, als mit einer Folie in der ein hoher HDPE-Anteil und ein Anteil von LDPE als Blend in der Folie bzw. in allen Schichten der Folie enthalten sind. Weitere Ausführungsformen sind in den angefügten Ansprüchen 2-13 definiert.

Vorzugsweise ist eine Außenschicht maximal 50% dicker ist als die andere Außenschicht, um ein übermäßiges Einrollen (Curling) der Polyethylen-Folie zu verhindern. Idealerweise sind die beiden Außenschichten gleich dick.

Durch den Aufbau der Polyethylen-Folie können auch Dicken der Polyethylen-Folie kleiner 30µm, vorzugsweise kleiner 20µm, realisiert werden, was die Folie insbesondere für die Verpackungsindustrie einsetzbar macht.

Zur Erzielung der notwendigen Steifigkeit ist ein Streckverhältnis der Polyethylen-Folie größer 1:2, vorzugsweise größer 1:3, insbesondere größer 1:4, vorteilhaft.

Um die Wärmeformbeständigkeit der Polyethylen-Folie gegenüber der reinen HDPE-Außenschicht noch weiter zu verbessern ist es vorteilhaft, wenn in zumindest einer Außenschicht ein wärmeformbeständiges Polyolefin-Material enthalten ist. Dabei kann das wärmeformbeständige Polyolefin-Material als koextrudierte Schicht auf die Außenschicht aufgebracht sein oder in die Außenschicht zugemischt sein, wobei auch beides möglich ist. Um die Recyclierbarkeit der gereckten PE-Folie und des daraus hergestellten PE-Folienlaminates nicht zu beeinträchtigen, sollte der Gesamtanteil des zugemischten Polyolefins nicht mehr als 20 Gewichtsprozent betragen.

Wenn die Polyethylen-Folie einen Haze-Wert von kleiner 10, vorzugsweise kleiner 8, besonders bevorzugt kleiner 5, hat, kann die hergestellte Polyethylen-Folie im Folienlaminat auch rückseitig bedruckt (also mit im Folienlaminat innenliegender Bedruckung) verwendet werden, da die Folie ausreichend transparent ist. Der Haze-Wert lässt sich durch das Streckverhältnis der Polyethylen-Folie verbessern.

Eine weitere Aufgabe der Erfindung ist es, ein Folienlaminat mit einer erfindungsgemäßen Polyethylen-Folie anzugeben, und insbesondere ein Monolaminat aus Polyethylen. Eine solches Folienlaminat zeichnet sich dadurch aus, dass die erfindungsgemäße Polyethylen-Folie auf eine Trägerschicht, insbesondere aus Polyethylen, aufkaschiert wird.

Damit ist es erstmals möglich, ein recyclingfähiges Monolaminat aus Polyethylen für die in der Verpackungsindustrie benötigten geringen Dicken herzustellen, bei dem eine PE-Schicht mit einem Reihendruckverfahren bedruckt ist.

Im Folienlaminat ist es ganz besonders vorteilhaft, wenn die Außenschicht der gereckten und bedruckten PE-Folie mit einem wärmeformbeständigen Polyolefin-Material beschichtet ist. , Dies betrifft also die der Trägerschicht aus Polyethylen als Siegelschicht, abgewandt angeordneten Seite, also die äußere Seite des Verpackungslaminates mit dem Druckbild.. Damit kann aufgrund der erhöhten Wärmeformbeständigkeit der Polyethylen-Folie die Siegeltemperatur bei der Verarbeitung, insbesondere in einem Verpackungsprozess, erhöht werden. Das verbessert die Verarbeitbarkeit des Folienlaminats.

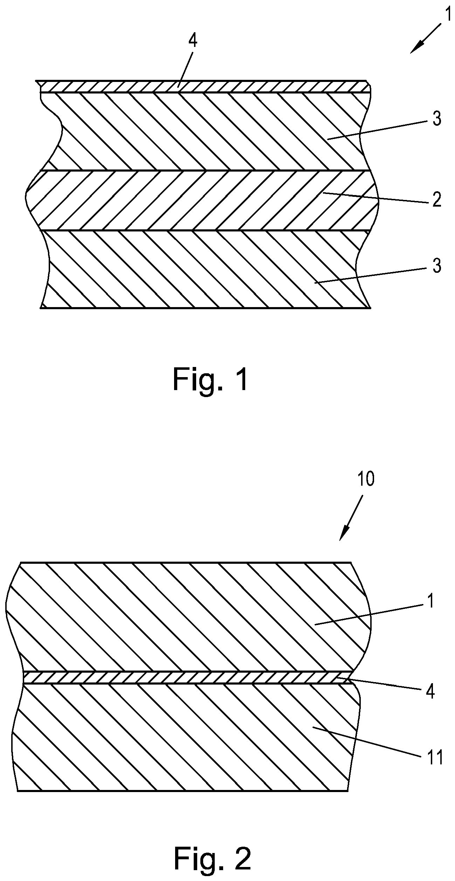

Die gegenständliche Erfindung wird nachfolgend unter Bezugnahme auf die Figuren 1 und 2 näher erläutert, die beispielhaft, schematisch und nicht einschränkend vorteilhafte Ausgestaltungen der Erfindung zeigen. Dabei zeigt
- Fig.1: eine erfindungsgemäße Polyethylen-Folie und
- Fig.2: ein erfindungsgemäßes Folienlaminat mit einer Polyethylen-Folie.

Die gegenständliche Erfindung wird nachfolgend näher erläutert, wobei in der nachfolgenden Beschreibung auf bestimmte Eigenschaften einer Kunststofffolie Bezug genommen werden, die wie folgt gemessen werden bzw. wie folgt definiert sind. Dabei wird auf Messverfahren zurückgegriffen, die in bekannten Normen der ASTM (American Society for Testing and Materials) - kurz ASTM-Norm - definiert sind.

### Elastizitätsmodul oder E-Modul:

Wird nach ASTM D882 gemessen, wobei hier als E-Modul (in MPa) der in der genannten Norm definierte 2% Sekanten Modul in Maschinenrichtung verwendet wird. Zur Messung des E-Moduls wurde ein Materialsample der zu vermessenden Folienbahn mit einer Messlänge von 100mm und einer Breite von 25 mm verwendet und der E-Modul bei einer Prüfgeschwindigkeit von 10mm/min gemessen.

Der E-Modul bei einer bestimmten Temperatur ist dann der gemessene E-Modul bei dieser Temperatur. Dazu wird die Messung bei der gewünschten Temperatur durchgeführt.

Der E-Modul in Maschinenrichtung ist der E-Modul, der bei einer gereckten Folie gemessen wird, wobei die Maschinenrichtung der Richtung der Streckung der Folie entspricht. Dies ist allerdings nur bei in einer Richtung gereckten Folien der Fall, nicht bei biaxial gereckten Folien. Hier ist die Maschinenrichtung die Richtung des Transports der Folienbahn.

### Trübung (Haze):

Der Haze-Wert ist ein Maß für die Trübung von transparenten Proben. Das Verfahren zur Messung des Haze-Wertes wird in der Norm ASTM D 1003 beschrieben.

### Bahnsteifigkeit:

Unter Bahnsteifigkeit (in N/mm) wird das Produkt aus dem oben definierten E-Modul und der Dicke der gemessenen Folienbahn verstanden.

Eine erfindungsgemäße Polyethylen-Folie 1 mit einer Schichtdicke von kleiner 40 µm soll eine Bahnsteifigkeit bei 70°C von zumindest 10 N/mm aufweisen, um auch in einem Reihendruckverfahren mit ausreichender Druckqualität bedruckt werden zu können. Für die Verpackungsindustrie werden Schichtdicken der Polyethylen-Folie 1 im Bereich von 15 - 40 µm angestrebt. Aufgrund dieser Bahnsteifigkeit ist die Polyethylen-Folie 1 bei einer Temperatur von 70°C ausreichend steif, um mit einem Reihendruckverfahren, wie beispielsweise dem Tiefdruckverfahren oder dem Flexo-Reihendruckverfahren, bedruckt werden zu können. Dabei kann beim Bedrucken eine Registergenauigkeit von zumindest +/-0,2mm sichergestellt werden, was für ein gutes Druckergebnis ausreichend ist. Wäre die Bahnsteifigkeit niedriger, wäre der erreichbare Registerfehler beim Drucken erheblich größer, was zu ungenügenden Druckergebnissen beim Bedrucken mit dem Reihendruckverfahren führen würde. Der Registerfehler ergibt sich insbesondere deshalb, weil in einem Reihendruckverfahren (wie das Tiefdruckverfahren oder Flexo-Reihendruckverfahren) mit zumindest zwei getrennten Druckwerken jede Druckfarbe einzeln aufgedruckt wird und nach dem Aufbringen jeder Druckfarbe jeweils ein Trocknungsschritt bei Temperaturen um die 70°C erfolgt. Dabei wird die Polyethylen-Folie 1 in jedem Trocknungsschritt auch mehrfach umgelenkt und durch den Trockner geführt, um den Trocknungsweg zu verlängern. Die Polyethylen-Folie 1 wird beim Drucken somit durch den langen Trocknungsweg erwärmt. Ist die Bahnsteifigkeit bei dieser Temperatur zu gering, dehnt sich die Polyethylen-Folie 1 beim Drucken, wodurch sich das Druckbild in aufeinanderfolgenden Farbaufträgen verschieben kann. Das führt zum Registerfehler.

Außerdem soll die Polyethylen-Folie 1 eine ausreichend hohe Wärmeformbeständigkeit aufweisen, damit ein damit hergestelltes Folienlaminat gut siegelfähig ist. Bei der Verarbeitung des Folienlaminats, z.B. in einem Abpackprozess, werden hohe Siegelbackentemperaturen angestrebt, um die Verarbeitbarkeit bzw. das Aufschmelzen der Siegelschicht des Folienlaminats Polyethylen-Folie 1, z.B. um Beutelverpackungen herzustellen, zu verbessern. Je höher die mögliche Siegeltemperatur, umso besser und rascher kann die Polyethylen-Folie 1 verarbeitet werden, was bei einer ausreichend hohen Wärmeformbeständigkeit der Polyethylen-Folie 1 erreicht werden kann. Die Wärmeformbeständigkeit gibt im Wesentlich an, ab welcher Temperatur die Polyethylen-Folie 1 beginnt aufzuschmelzen.

Diese Ziele werden mit einer erfindungsgemäße Polyethylen-Folie 1 mit einer Dicke kleiner 40 µm erreicht, die eine relativ dünne, zähe zentrale Schicht 2 und zwei daran an jeder Seite anschließende deutlich dickere Außenschichten 3 aufweist. Dazu soll die erfindungsgemäße Polyethylen-Folie 1 einen HDPE (Polyethylen mit hoher Dichte) Anteil von zumindest 60 Vol% (Volumenprozent) auf, um die Bahnsteifigkeit der Polyethylen-Folie 1 und die Wärmeformbeständigkeit zu erhöhen. Damit können die geforderten Eigenschaften der Polyethylen-Folie 1 erreicht werden. Hierbei ist der Gesamt-HDPE-Anteil der Polyethylen-Folie 1 aber auch die Anordnung des HDPE innerhalb der Schichten der Polyethylen-Folie 1 entscheidend. Die Polyethylen-Folie 1 ist erfindungsgemäß mehrschichtig ausgeführt (Fig.1), mit zumindest einer zentralen Schicht 2 hauptsächlich aus LLDPE (Linear low-density Polyethylen) oder mLLDPE (Metallocene Linear low-density Polyethylen) (oder einer Mischung daraus). Die zentrale Schicht 2 enthält zumindest 80 Vol% LLDPE oder mLLDPE, die restlichen Anteile können andere Polyolefin-Materialien, insbesondere ein Polyethylen, sein, wie z.B. HDPE. Die zentrale Schicht 2 ist an jeder der beiden Seiten von einer Außenschicht 3 aus HDPE umgeben und dient der verbesserten Zähigkeit der Polyethylen-Folie 1. Die beiden Außenschichten 3 sind dabei zusammen mindestens dreimal so dick, vorzugsweise mindestens viermal so dick, wie die zentrale Schicht 2. Um ein (übermäßiges) Einrollen (Curling) der Polyethylen-Folie 1 zu verhindern, ist eine der beiden Außenschichten 3 vorzugsweise maximal 50% dicker als die andere Außenschicht 3. Idealerweise wird ein symmetrischer Schichtaufbau mit zwei gleich dicken Außenschichten 3 angestrebt. Damit fällt z.B. ein Schichtaufbau der Polyethylen-Folie 1 von 1,5/1/1,5 (Außenschichten 3 zusammen dreimal so dick wie zentrale Schicht 2) mit HDPE / LLDPE oder mLLDPE / HDPE oder 2/1/2 (Außenschichten 3 zusammen viermal so dick wie zentrale Schicht 2) mit HDPE / LLDPE oder mLLDPE / HDPE unter diese Definition. Ein möglicher unsymmetrischer Schichtaufbau wäre z.B. 3/1/2 (Au-ßenschichten 3 zusammen fünfmal so dick wie zentrale Schicht 2) mit HDPE / LLDPE oder mLLDPE / HDPE. Je dicker die Außenschichten 3 zusammen gegenüber der zentralen der zentralen Schicht 2 ist, umso höher wird auch der Gesamt-HDPE-Anteil der Polyethylen-Folie 1, der erfindungsgemäß zumindest 60 Vol%, vorzugsweise zumindest 70 Vol% und ganz besonders vorzugsweise zumindest 80 Vol% ausmacht.

Der HDPE-Anteil in der mehrschichtigen Polyethylen-Folie 1 ist folglich mindestens 60 Vol%, vorzugsweise zumindest 70 Vol% und ganz besonders vorzugsweise zumindest 80 Vol%, um die geforderte Bahnsteifigkeit und Wärmeformbeständigkeit zu erreichen. In eine, oder auch in beide, HDPE Außenschichten 3 kann auch ein kleiner Anteil eines anderen Polyolefin-Materials zugemischt sein, beispielsweise 5-10% LLDPE C8, um die Zähigkeit der Polyethylen-Folie 1 weiter zu verbessern.

Die mehrschichtige Polyethylen-Folie 1 kann beispielswiese durch Koextrusion der einzelnen Schichten hergestellt werden. Die zentrale Schicht 2 könnte dabei selbst auch wiederum mehrschichtig aufgebaut sein. Ebenso kann eine Außenschicht 3 mehrschichtig aufgebaut sein.

Um die geforderte Bahnsteifigkeit bei den angestrebten geringen Dicken der Polyethylen-Folie 1 von kleiner 40 µm leichter zu erreichen, muss die Polyethylen-Folie 1 zusätzlich in zumindest einer Richtung gereckt sein. Das Recken der Polyethylen-Folie 1 hat den zusätzlichen vorteilhaften Effekt, dass damit der Haze-Wert der Polyethylen-Folie verringert wird. Das Streckverhältnis der gereckten Polyethylen-Folie 1 ist dabei vorzugsweise größer 1:2, insbesondere größer 1:3 und ganz besonders vorteilhaft größer 1:4.

Zumindest eine der beiden Außenschichten 3 wird mit einem Reihendruckverfahren, wie dem Tiefdruckverfahren oder Flexo-Reihendruckverfahren, bedruckt (Druckschicht 4 in Fig.1).

Die Bedruckbarkeit einer erfindungsgemäßen Polyethylen-Folie 1 für die Verpackungsindustrie wird im nachfolgenden Vergleichsbeispiel bestätigt:

| Polyethylen-Folie | Folie 1 | Folie 2 | Folie 3 | Folie 4 |
|---|---|---|---|---|
| | 50% LDPE, | 40% HDPE | 50% HDPE | 80% HDPE |
| | 50% LLDPE | 60% LLDPE | 50% LLDPE | 20% LLDPE |
| | koextrudiertes Blend in allen | koextrudiert | koextrudiert | koextrudiert |
| | Schichten gleich | HDPE in Außenschichten | HDPE in Außenschichten | HDPE in Außenschichten |
| Schichtaufbau | 1/1/1 | 1/3/1 | 1/2/1 | 2/1/2 |
| Streckverhältnis | none | 1:6 | 1:6 | 1:5 |
| Dicke [µm] | 70 | 25 | 25 | 20 |
| E-Modul bei 70°C [MPa] | 75 | 350 | 480 | 750 |
| Bahnsteifigkeit [N/mm] | 5,25 | 8,75 | 12 | 15 |
| Registergenauigkeit [mm] | +/- 0,7 | +/- 0,5 | +/- 0,15 | +/- 0,05 |

Im Falle der gereckten Folien 2, 3 und 4 bezieht sich der E-Modul auf die Maschinenrichtung.

Aus der obigen Tabelle ist erkennbar, dass die Polyethylen-Folie 1 bei einem HDPE-Anteil von größer 60 Vol%, einer Schichtenverteilung von zumindest 1,5/1/1,5 und einer genügenden Streckung (Folie 3) aufgrund der erzielten Bahnsteifigkeit auch bei Dicken von kleiner 40µm ausreichend steif ist, um in einem Reihendruckverfahren (z.B. Tiefdruckverfahren oder Flexo-Reihendruckverfahren) mit benötigter Registergenauigkeit bedruckt werden zu können. Ohne Recken wären auch die Folie 3 und 4 aber nicht ausreichend steif für ein Reihendruckverfahren. Aufgrund des HDPE-Anteils von weisen die Folien 3 und 4 auch eine gute Wärmeformbeständigkeit auf, wobei die Wärmeformbeständigkeit der Folie 4 aufgrund des hohen HDPE-Anteils von 80 Vol% besonders gut ist.

Eine wie in DE 10 2005 003922A1 beschriebene Folie aus reinem HDPE wäre als Druckträger zwar ausreichend steif für die Bedruckung und wärmeformbeständig, jedoch für die Anwendung als Verpackungslaminat nicht zäh genug und würde zum Spleißen in Richtung der Verstreckung tendieren. Durch einen erfindungsgemäßen Folienaufbau lassen sich alle diese widersprüchlichen Eigenschaften vereinen.

Die Wärmeformbeständigkeit der Polyethylen-Folie 1 kann weiter verbessert werden, wenn eine Außenschicht 3 mit einem kompatiblen, wärmeformbeständigen Polyolefin-Material, wie beispielsweise Polypropylen (PP) oder einem Cyclo-Olefin-Copolymer (COC), ergänzt wird. Dabei kann das wärmeformbeständige Material auf zumindest einer Seite der Polyethylen-Folie 1 als dünne Schicht auf die Außenschicht 3 aufextrudiert werden. Es ist aber auch denkbar, das wärmeformbeständige Material der zumindest einen Außenschicht 3 aus HDPE zuzumischen. Auch beides gleichzeitig, also koextrudierte Schicht und Zumischung, ist denkbar. Werden in der Polyethylen-Folie 1 neben Polyethylen auch andere wärmeformbeständige Polyolefine (in den verschiedenen Typen) eingesetzt, so soll der Polyethylen Anteil der Polyethylen-Folie 1 zumindest 80 Vol% ausmachen, um die Recycelfähigkeit der Polyethylen-Folie 1 nicht zu beeinträchtigen. Die restlichen 20 Vol% werden durch ein kompatibles Poylolefin-Material gebildet.

Ein erfindungsgemäßes Folienlaminat 10, insbesondere für die Verpackungsindustrie, mit einer oben beschriebenen Polyethylen-Folie 1, wie in Fig. 2 dargestellt, wird beispielsweise wie folgt hergestellt:
Zuerst wird eine erfindungsgemäße Polyethylen-Folie 1 mit einer Dicke kleiner 40 µm, vorzugsweise kleiner 30 µm, insbesondere vorzugsweise kleiner 20 µm, mit einer Bahnsteifigkeit bei 70°C von zumindest 10 N/mm hergestellt. Diese Polyethylen-Folie 1 wird mittels Tiefdruckverfahren oder in einem anderen Reihendruckverfahren, wie z.B. dem Flexo-Reihendruckverfahren, zumindest einseitig bedruckt. Das kann aufgrund der erzielten Steifigkeit mit ausreichender Genauigkeit erfolgen.

Die derart bedruckte Polyethylen-Folie 1 wird dann auf eine Trägerfolie 11, vorzugsweise eine ungereckte Träger-Polyethylen-Folie, aufkaschiert, um das Folienlaminat 10 herzustellen. Falls die Trägerfolie 11 aus Polyethylen besteht wird ein Monomateriallaminat erzeugt. Dabei kann die bedruckte Seite mit der Druckschicht 4 der bedruckten Polyethylen-Folie 1 auch innenliegend, also der Trägerfolie 11 zugewandt, sein, wenn die Trübung der bedruckten Polyethylen-Folie 1 ausreichend niedrig ist. Davon kann ausgegangen werden, wenn der Haze-Wert der bedruckten Polyethylen-Folie 1 kleiner 10, vorzugsweise kleiner 8, besonders bevorzugt kleiner 5, ist.

Eine Träger-Polyethylen-Folie des Folienlaminats 10 bildet eine Siegelschicht aus. Wenn die erfindungsgemäße Polyethylen-Folie 1 in einer Außenschicht 3 ein zusätzliches wärmeformbeständiges Material enthält (als Zumischung oder als separate koextrudierte Schicht), dann ist diese Außenschicht 3 vorzugsweise der Träger-Polyethylen-Folie abgewandt angeordnet, um die erhöhte Wärmeformbeständigkeit ausnutzen zu können.

Solche Haze-Werte, und auch hohe Steifigkeitswerte bei dünnen Verpackungsfolien, können in Polyethylen-Folien 1 mit HDPE Anteil erzielt werden, wenn als bedruckte Polyethylen-Folie 1 eine in zumindest einer Richtung gereckte Polyethylen-Folie 1 verwendet wird. Dann wird selbst das ansonsten eher trübe HDPE weitgehend transparent.

Die erfindungsgemäße bedruckte Polyethylen-Folie 1 kann natürlich auch mit anderen oder zusätzlichen Schichten kaschiert werden. Beispielsweise kann im Folienlaminat eine zwischenliegende Aluminiumschicht als Aromabarriere vorgesehen sein. Gleichfalls könnte die bedruckte Polyethylen-Folie 1 oder die Trägerfolie 11 auch metallisiert oder mit einem Barrierelack beschichtet werden. Die erfindungsgemäße bedruckte Polyethylen-Foliel könnte je nach Anwendung auch auf eine beliebige andere Trägerschicht aufkaschiert werden, wobei die Trägerschicht selbst mehrschichtig ausgeführt sein kann. Aufgrund der Bedruckung ist die erfindungsgemäße Polyethylen-Folie 1 aber vorzugsweise eine äußere Schicht des hergestellten Folienlaminats 10.

Die typische Gesamtdicke des erfindungsgemäßen Folienlaminats 10 für die Verpackungsindustrie beträgt 40 - 120 µm. Im Falle eines Monomateriallaminats werden Gesamtdicken im Bereich von 30 - 150 µm angestrebt.

## Patentansprüche

1. Recyclingfähige Polyethylen-Folie aus zumindest 80% Polyethylen-Material und maximal 20 % kompatiblen Polyolefin-Material, wobei die Polyethylen-Folie (1) kleiner 40 µm dick ist und eine zentrale Schicht (2) aus linearem Polyethylen niedriger Dichte (LLDPE) und/oder linearem Metallocene Polyethylen niedriger Dichte (mLLDPE) und zwei mit der zentralen Schicht (2) verbundenen Außenschichten (3) aus Polyethylen hoher Dichte (HDPE), die die zentrale Schicht (2) umgeben, aufweist, wobei der HDPE-Anteil der Polyethylen-Folie (1) mindestens 60 Vol%, vorzugsweise mindestens 70 Vol%, ganz besonders vorzugsweise mindestens 80 Vol%, ausmacht und wobei die Polyethylen-Folie (1) in zumindest einer Richtung gereckt ist, **dadurch gekennzeichnet, dass** die beiden Außenschichten (3) zusammen mindestens dreimal so dick sind, vorzugsweise mindestens viermal so dick sind, wie die zentrale Schicht (2).

2. Recyclingfähige Polyethylen-Folie nach Anspruch 1, **dadurch gekennzeichnet, dass** eine Außenschicht (3) maximal 50% dicker ist als die andere Außenschicht (3).

3. Recyclingfähige Polyethylen-Folie nach Anspruch 1 oder 2, **dadurch gekennzeichnet, dass** die Dicke der Polyethylen-Folie (1) kleiner 30µm, vorzugsweise kleiner 20µm, ist.

4. Recyclingfähige Polyethylen-Folie nach einem der Ansprüche 1 bis 3, **dadurch gekennzeichnet, dass** eine Außenschicht (3) mit einem Reihendruckverfahren bedruckt ist.

5. Recyclingfähige Polyethylen-Folie nach einem der Ansprüche 1 bis 4, **dadurch gekennzeichnet, dass** das Streckverhältnis der Polyethylen-Folie (1) größer 1:2, vorzugsweise größer 1:3, insbesondere größer 1:4, ist.

6. Recyclingfähige Polyethylen-Folie nach einem der Ansprüche 1 bis 5, **dadurch gekennzeichnet, dass** in zumindest einer Außenschicht (3) ein wärmeformbeständiges Polyolefin-Material in einer maximalen Menge von 20 Vol% enthalten ist.

7. Recyclingfähige Polyethylen-Folie nach Anspruch 6, **dadurch gekennzeichnet, dass** das wärmeformbeständige Polyolefin-Material zumindest teilweise als koextrudierte Schicht auf die Außenschicht (3) aufgebracht ist.

8. Recyclingfähige Polyethylen-Folie nach Anspruch 6, **dadurch gekennzeichnet, dass** das wärmeformbeständige Polyolefin-Material zumindest teilweise in die Außenschicht (3) zugemischt ist.

9. Recyclingfähige Polyethylen-Folie nach einem der Ansprüche 1 bis 7, **dadurch gekennzeichnet, dass** die Polyethylen-Folie (1) einen Haze-Wert von kleiner 10, vorzugsweise kleiner 8, besonders bevorzugt kleiner 5, hat.

10. Folienlaminat mit zumindest einer Trägerschicht (11) und einer damit verbundenen recyclingfähigen Polyethylen-Folie (1) nach einem der Ansprüche 1 bis 9.

11. Folienlaminat nach Anspruch 10, **dadurch gekennzeichnet, dass** die Trägerschicht (11) aus Polyethylen, vorzugsweise ein ungerecktes Polyethylen, hergestellt ist.

12. Folienlaminat nach Anspruch 10 oder 11, **dadurch gekennzeichnet, dass** die bedruckte Außenschicht (3) der Trägerschicht (11) zugewandt angeordnet ist.

13. Folienlaminat nach einem der Ansprüche 10 bis 12, **dadurch gekennzeichnet, dass** die Außenschicht (3) mit einem wärmeformbeständigen Polyolefin-Material der Trägerschicht (11) abgewandt angeordnet ist.

## Claims

1. A recyclable polyethylene film of at least 80% polyethylene material and max. 20% compatible polyolefin material, wherein the polyethylene film (1) is less than 40 µm thick and has a central layer (2) of linear low-density polyethylene (LLDPE) and/or metallocene linear low-density polyethylene (mLLDPE) and two outer layers (3) made of high-density polyethylene (HDPE) bonded to the central layer (2) and surrounding the central layer (2), wherein the HDPE content of the polyethylene film (1) constitutes at least 60 vol%, preferably at least 70 vol%, most especially preferably at least 80 vol%, and wherein the polyethylene film (1) is stretched in at least one direction, **characterized in that** the two outer layers (3) together are at least three times as thick as the central layer (2), preferably at least four times as thick.

2. The recyclable polyethylene film according to claim 1, **characterized in that** an outer layer (3) is max. 50% thicker than the other outer layer (3).

3. The recyclable polyethylene film according to claim 1 or 2, **characterized in that** the thickness of the polyethylene film (1) is less than 30 µm, preferably less than 20 µm.

4. The recyclable polyethylene film according to any one of claims 1 to 3, **characterized in that** an outer layer (3) is printed by an inline printing process.

5. The recyclable polyethylene film according to any one of claims 1 to 4, **characterized in that** the stretching ratio of the polyethylene film (1) is greater than 1:2, preferably greater than 1:3, in particular greater than 1:4.

6. The recyclable polyethylene film according to any one of claims 1 to 5, **characterized in that** a heat-resistant polyolefin material is present in a maximum amount of 20 vol% in at least one outer layer (3).

7. The recyclable polyethylene film according to claim 6, **characterized in that** the heat-resistant polyolefin material is applied at least partially as a coextruded layer to the outer layer (3).

8. The recyclable polyethylene film according to claim 6, **characterized in that** the heat-resistant polyolefin material is blended at least partially into the outer layer (3).

9. The recyclable polyethylene film according to any one of claims 1 to 7, **characterized in that** the polyethylene film (1) has a haze value of less than 10, preferably less than 8, especially preferably less than 5.

10. A film laminate having at least one backing layer (11) and a recyclable polyethylene film (1) bonded thereto according to any one of claims 1 to 9.

11. The film laminate according to claim 10, **characterized in that** the backing layer (11) is produced from polyethylene, preferably an unstretched polyethylene.

12. The film laminate according to claim 10 or 11, **characterized in that** the printed outer layer (3) is arranged so that it faces the backing layer (11).

13. The film laminate according to any one of claims 10 to 12, **characterized in that** the outer layer (3) with a heat-resistant polyolefin material is arranged facing away from the backing layer (11).

## Revendications

1. Film de polyéthylène recyclable composé d'au moins 80 % de matériau polyéthylène et d'un maximum de 20 % de matériau polyoléfine compatible, le film de polyéthylène (1) ayant une épaisseur inférieure à 40 µm et présentant une couche centrale (2) de polyéthylène à basse densité linéaire (LLDPE) et/ou de polyéthylène métallocène à basse densité linéaire (mLLDPE) et deux couches extérieures (3) en polyéthylène haute densité (HDPE) reliées à la couche centrale (2) et entourant la couche centrale (2), la partie HDPE du film de polyéthylène (1) représentant au moins 60 % en volume, de préférence au moins 70 % en volume, de manière tout particulièrement préférée au moins 80 % en volume, et le film de polyéthylène (1) étant étiré dans au moins une direction, **caractérisé en ce que** les deux couches extérieures (3), ensemble, sont au moins trois fois plus épaisses, de préférence au moins quatre fois plus épaisses que la couche centrale (2).

2. Film de polyéthylène recyclable selon la revendication 1, **caractérisé en ce qu'**une couche extérieure (3) est au maximum 50 % plus épaisse que l'autre couche extérieure (3).

3. Film de polyéthylène recyclable selon la revendication 1 ou 2, **caractérisé en ce que** l'épaisseur du film de polyéthylène (1) est inférieure à 30 µm, de préférence inférieure à 20 µm.

4. Film de polyéthylène recyclable selon l'une des revendications 1 à 3, **caractérisé en ce qu'**une couche extérieure (3) est imprimée par un procédé d'impression en série.

5. Film de polyéthylène recyclable selon l'une des revendications 1 à 4, **caractérisé en ce que** le rapport d'étirement du film de polyéthylène (1) est supérieur à 1:2, de préférence supérieur à 1:3, en particulier supérieur à 1:4.

6. Film de polyéthylène recyclable selon l'une des revendications 1 à 5, **caractérisé en ce qu'**un matériau polyoléfine résistant à la chaleur est contenu dans au moins une couche extérieure (3) en une quantité maximale de 20 % en volume.

7. Film de polyéthylène recyclable selon la revendication 6, **caractérisé en ce que** le matériau polyoléfine résistant à la chaleur est appliqué au moins partiellement sous forme de couche coextrudée sur la couche extérieure (3).

8. Film de polyéthylène recyclable selon la revendication 6, **caractérisé en ce que** le matériau polyoléfine résistant à la chaleur est au moins partiellement mélangé dans la couche extérieure (3).

9. Film de polyéthylène recyclable selon l'une des revendications 1 à 7, **caractérisé en ce que** le film de polyéthylène (1) a une valeur de trouble inférieure à 10, de préférence inférieure à 8, de manière particulièrement préférée inférieure à 5.

10. Film stratifié comportant au moins une couche support (11) et un film de polyéthylène (1) recyclable associé à celle-ci selon l'une des revendications 1 à 9.

11. Film stratifié selon la revendication 10, **caractérisé en ce que** la couche support (11) est en polyéthylène, de préférence en polyéthylène non étiré.

12. Film stratifié selon la revendication 10 ou 11, **caractérisé en ce que** la couche extérieure (3) imprimée est disposée face à la couche support (11).

13. Film stratifié selon l'une des revendications 10 à 12, **caractérisé en ce que** la couche extérieure (3) est disposée avec un matériau polyoléfine résistant à la chaleur, à l'opposé de la couche support (11).
